# EUROPÄISCHE PATENTSCHRIFT

(11) **EP 1 799 452 B1**
(45) Veröffentlichungstag und Bekanntmachung des Hinweises auf die Patenterteilung: **02.10.2013**
(21) Anmeldenummer: 05776170.2
(22) Anmeldetag: 10.08.2005
(51) Int. Cl.: B32B 27/08

(54) **MEHRSCHICHTVERBUND MIT EVOH-SCHICHT UND SCHUTZSCHICHT**
MULTI-LAYER COMPOSITE COMPRISING AN EVOH LAYER AND A PROTECTIVE LAYER
COMPOSITE MULTICOUCHE COMPORTANT UNE COUCHE EVOH ET UNE COUCHE DE PROTECTION

(30) Priorität: 07.10.2004 DE 102004048776
(43) Veröffentlichungstag der Anmeldung: 27.06.2007
(73) Patentinhaber: Evonik Degussa GmbH, 45128 Essen (DE)
(72) Erfinder: SCHMITZ, Guido, 48249 Dülmen (DE); HÄGER, Harald, 59348 Lüdinghausen (DE); RIES, Hans, 45772 Marl (DE)
(86) Internationale Anmeldenummer: PCT/EP2005/053946
(87) Internationale Veröffentlichungsnummer: WO 2006/040206

(56) Entgegenhaltungen:
- WO-A-97/12758
- US-A- 5 763 034
- US-A1- 2002 142 118
- US-B1- 6 170 534

## Beschreibung

Gegenstand der Erfindung ist ein Mehrschichtverbund, der eine Sperrschicht aus einem Ethylen-Vinylalkohol-Copolymer (EVOH) sowie eine Schutzschicht aus einem gegen Alkohole sperrenden Material besitzt, das ausgewählt ist aus einem Fluorpolymer und einem Polyolefin.

Bei der Entwicklung von Mehrschichtverbunden, die zum Beispiel als Rohr zur Führung flüssiger oder gasförmiger Medien in Kraftfahrzeugen eingesetzt werden, müssen die verwendeten Formmassen eine ausreichende chemische Beständigkeit gegenüber den zu führenden Medien aufweisen, und die Rohre müssen allen an sie gestellten mechanischen Anforderungen auch nach langfristiger Beanspruchung durch Kraftstoffe, Öle oder Temperatureinwirkung gewachsen sein. Neben der Forderung nach einer ausreichenden Kraftstoffbeständigkeit wird durch die Automobilindustrie eine verbesserte Sperrwirkung der Kraftstoffleitungen verlangt, um die Emissionen von Kohlenwasserstoffen in der Umwelt zu reduzieren. Dies hat zur Entwicklung von Mehrschichtrohrsystemen geführt, bei denen beispielsweise EVOH als Sperrschichtwerkstoff zum Einsatz kommt. Entsprechende Systeme sind beispielsweise in der US 5 038 883, der US 5 076 329 und der EP-A-1 216 826 beschrieben. Allerdings weisen diese bekannten Rohre den Nachteil auf, dass die Sperrwirkung gegenüber Alkoholen nicht ausreicht und dass die Innenschicht eine nicht ausreichende Sperrwirkung gegenüber Wasser besitzt, das mit der Zeit in die EVOH-Schicht gelangt und deren Sperrwirkung gegenüber Alkoholen weiter verschlechtert.

Zur Lösung dieses Problems schlägt die EP-A-0 559 445 vor, als innerste Schicht eine Fluorpolymerschicht anzubringen. Fluorpolymer- und EVOH-Schicht werden durch einen Haftvermittler miteinander verbunden. Als Haftvermittler werden Ethylen-Acrylester-Copolymere, Ethylen-Vinylacetat-Copolymere, Epoxygruppen tragende Polyolefine und Pfropfcopolymere aus Vinylidenfluorid und Methylmethacrylat offenbart. Es wird aber nicht belegt, ob damit überhaupt eine Haftung erzielt wird, von einer permanenten Haftung ganz abgesehen. Aufgrund der offenbarten Bestandteile, die teilweise in Kraftstoffen löslich sind, weisen diese Haftvermittler eine nicht ausreichende Kraftstoffbeständigkeit sowie eine unzureichende Wärmeformbeständigkeit auf. Darüber hinaus kann anhand der sehr allgemeinen Angaben die Lehre der EP-A-0 559 445 in diesem Punkt vom Fachmann nicht ohne weiteres nachgearbeitet werden.

In Abwandlung hiervon ist auch eine polyolefinische Innenschicht in der Lage, die Sperrwirkung gegenüber Alkoholen zu verbessern und insbesondere das EVOH vor Wasser zu schützen. Aber auch hier stellt sich das Problem, dass eine ausreichende Haftung erzielt werden muss.

Demgemäss stellte sich die Aufgabe, einen Haftvermittler zu entwickeln, der eine gute Haftung zwischen dem EVOH auf der einen Seite und dem Fluorpolymeren oder Polyolefin auf der anderen Seite ermöglicht. Darüber hinaus bestand die Aufgabe, eine Haftung zu ermöglichen, die durch Kontakt mit Kraftstoff nicht beeinträchtigt wird. Weiterhin sollte die Haftung während der Gebrauchsdauer des Verbunds in ausreichendem Maße erhalten bleiben. Insgesamt sollte dabei eine möglichst einfache technische Lösung angestrebt werden.

Diese Aufgaben wurden gelöst durch einen Mehrschichtverbund, der folgende Schichten enthält:
I. Eine innere Schicht I, ausgewählt aus einer gegebenenfalls haftungsmodifizierten Fluorpolymer-Formmasse und einer gegebenenfalls haftungsmodifizierten Polyolefin-Formmasse;
II. eine Haftvermittlerschicht II, die folgende Zusammensetzung aufweist:
   a) 0 bis 80 Gew.-Teile, bevorzugt 1 bis 60 Gew.-Teile und besonders bevorzugt 3 bis 40 Gew.-Teile, eines Pfropfcopolymers, das unter Verwendung folgender Monomerer hergestellt wird:
      - 0,5 bis 25 Gew.%, bezogen auf das Pfropfcopolymer, eines Polyamins mit mindestens 4, bevorzugt mindestens 8 und besonders bevorzugt mindestens 11 Stickstoffatomen und einem zahlenmittleren Molekulargewicht Mₙ von bevorzugt mindestens 146 g/mol, besonders bevorzugt mindestens 500 g/mol und insbesondere bevorzugt von mindestens 800 g/mol sowie
      - polyamidbildende Monomere, ausgewählt aus Lactamen, ω-Aminocarbonsäuren und/oder äquimolaren Kombinationen von Diamin und Dicarbonsäure;
   b) 0 bis 100 Gew.-Teile, bevorzugt 10 bis 75 Gew.-Teile und besonders bevorzugt 25 bis 65 Gew.-Teile, Polyamid,
   c) 0 bis 85 Gew.-Teile, bevorzugt 5 bis 75 Gew.-Teile, besonders bevorzugt 10 bis 65 Gew.-Teile und insbesondere bevorzugt 20 bis 55 Gew.-Teile eines Polymeren, ausgewählt aus Fluorpolymeren und Polyolefinen,
      wobei die Summe der Gew.-Teile von a), b) und c) 100 ergibt
      und wobei zusätzlich
      - in der Summe der Komponenten a) und b) mindestens 20 Gew.-Teile, bevorzugt mindestens 40 Gew.-Teile und besonders bevorzugt mindestens 60 Gew.-Teile aus Monomereinheiten bestehen, die sich von Caprolactam und/oder der Kombination Hexamethylendiamin/Adipinsäure, Hexamethylendiamin/Korksäure, Hexamethylen-diamin/Sebacinsäure, Hexamethylendiamin/Dodecandisäure, Hexamethylendiamin/Isophthalsäure oder Hexamethylendiamin/Terephthalsäure herleiten und
   d) maximal 50 Gew.-Teile, bevorzugt maximal 30 Gew.-Teile und besonders bevorzugt maximal 20 Gew.-Teile Zusatzstoffe, ausgewählt aus schlagzähmachendem Kautschuk und/oder üblichen Hilfs- bzw. Zuschlagstoffen;
III. eine Schicht III aus einer EVOH-Formmasse.

Der Mehrschichtverbund ist im allgemeinen ein Rohr oder ein Hohlkörper.

Das für die Schicht I verwendete Fluorpolymere kann beispielsweise ein Polyvinylidenfluorid (PVDF), ein Ethylen-Tetrafluorethylen-Copolymer (ETFE), ein mit Hilfe einer Terkomponente wie beispielsweise Propen, Hexafluorpropen, Vinylfluorid oder Vinylidenfluorid modifiziertes ETFE (beispielsweise EFEP), ein Ethylen-Chlortrifluorethylen-Copolymer (E-CTFE), ein Polychlortrifluorethylen (PCTFE), ein Tetrafluorethylen-Hexafluorpropen-Vinylidenfluorid-Copolymer (THV), ein Tetrafluorethylen-Hexafluorpropen-Copolymer (FEP) oder ein Tetrafluorethylen-Perfluoralkylvinylether-Copolymer (PFA) sein.

Wenn der Haftvermittler der Schicht II selbst kein Fluorpolymer in ausreichender Menge enthält, so ist das Fluorpolymer der Schicht I vorzugsweise haftungsmodifiziert, das heißt, dass funktionelle Gruppen vorhanden sind, die mit Aminogruppen des Haftvermittlers reagieren können und somit eine Phasenanbindung ermöglichen. Eine derartige Haftungsmodifizierung ist generell auf zwei Wegen möglich:
- Entweder enthält das Fluorpolymer eingebaute funktionelle Gruppen, beispielsweise Säureanhydridgruppen oder Carbonatgruppen, wie in der US 5 576 106, der US-A-2003148125, der US-A-2003035914, der US-A-2002104575, der JP-A-10311461, der EP-A-0 726 293, der EP-A-0 992 518 oder der WO 9728394 beschrieben;
- oder die Fluorpolymer-Formasse enthält ein mit dem Fluorpolymer mischbares oder zumindest verträgliches Polymeres, das funktionelle Gruppen enthält. Derartige Systeme sind beispielsweise in der EP-A-0 637 511 bzw. der hierzu äquivalenten US 5 510 160 sowie in der EP-A-0 673 762 bzw. der hierzu äquivalenten US 5 554 426 offenbart, auf die hiermit ausdrücklich Bezug genommen wird. Das modifizierte Fluorpolymer der EP-A-0 673 762 besteht aus
   - 97,5 bis 50 Gew.-%, bevorzugt 97,5 bis 80 Gew.-% und besonders bevorzugt 96 bis 90 Gew.-% PVDF sowie
   - 2,5 bis 50 Gew.-%, bevorzugt 2,5 bis 20 Gew.-% und besonders bevorzugt 4 bis 10 Gew.-% eines Acrylatcopolymers, das mindestens folgende Grundbausteine aufweist:
      i) 14 bis 85 Gew.-% Esterbausteine,
      ii) 0 bis 75 Gew.-% Imidbausteine,
      iii) 0 bis 15 Gew.-% Carbonsäurebausteine und
      iiii) 7 bis 20 Gew.-Teile Carbonsäureanhydridbausteine.

Bezüglich näherer Einzelheiten sei auf die in Bezug genommenen Schriften verwiesen, deren Inhalt ausdrücklich zum Offenbarungsgehalt der vorliegenden Anmeldung gehören soll.

Das für die Schicht I alternativ verwendete Polyolefin kann in erster Linie ein Polyethylen, insbesondere ein Polyethylen hoher Dichte (HDPE), oder ein isotaktisches Polypropylen sein. Das Polypropylen kann hierbei ein Homo- oder ein Copolymer sein, beispielsweise mit Ethylen oder 1-Buten als Comonomer, wobei Random- als auch Blockcopolymere eingesetzt werden können. Darüber hinaus kann das Polypropylen auch schlagzähmodifiziert sein, beispielsweise dem Stand der Technik entsprechend mittels Ethylen-Propylen-Kautschuk (EPM) oder EPDM.

Auch das Polyolefin der Schicht I ist dann, wenn der Haftvermittler der Schicht II selbst kein Polyolefin in ausreichender Menge enthält, vorzugsweise haftungsmodifiziert in dem Sinne, dass funktionelle Gruppen vorhanden sind, die mit Aminogruppen des Haftvermittlers reagieren können. Geeignete funktionelle Gruppen sind in erster Linie Carboxylgruppen, Carbonsäureanhydridgruppen, Carbonatgruppen, Acyllactamgruppen, Oxazolingruppen, Oxazingruppen, Oxazinongruppen, Carbodiimidgruppen oder Epoxidgruppen.

Die funktionellen Gruppen werden, dem Stand der Technik entsprechend, durch Umsetzung mit olefinisch ungesättigten funktionellen Verbindungen wie beispielsweise Acrylsäure, Maleinsäure, Fumarsäure, Maleinsäuremonobutylester, Maleinsäureanhydrid, Aconitsäureanhydrid, Itaconsäureanhydrid oder Vinyloxazolin, im allgemeinen radikalisch und/oder thermisch, auf die Polyolefinkette aufgepfropft, oder sie werden durch radikalische Copolymerisation der olefinisch ungesättigten funktionellen Verbindungen mit dem Olefin in die Hauptkette eingebaut.

Beim Pfropfcopolymer der Komponente II.a) liegt die Aminogruppenkonzentration bevorzugt im Bereich von 100 bis 2 500 mmol/kg.

Als Polyamin können beispielsweise folgende Substanzklassen verwendet werden:
- Polyvinylamine (Römpp Chemie Lexikon, 9. Auflage, Band 6, Seite 4921, Georg Thieme Verlag Stuttgart 1992);
- Polyamine, die aus alternierenden Polyketonen hergestellt werden (DE-OS 196 54 058);
- Dendrimere wie beispielsweise

   ((H₂N-(CH₂)₃)₂N-(CH₂)₃)₂-N(CH₂)₂-N((CH₂)₂-N((CH₂)₃-NH₂)₂)₂

   (DE-A-196 54 179) oder
   Tris(2-aminoethyl)amin, N,N-Bis(2-aminoethyl)-N',N'-bis[2-[bis(2-aminoethyl)amino]-ethyl]-1,2-ethandiamin,
   3,15-Bis(2-aminoethyl)-6,12-bis[2-[bis(2-aminoethyl)amino]ethyl]-9-[2-[bis[2-bis(2-aminoethyl)amino]ethyl]amino]ethyl]3,6,9,12,15-pentaazaheptadecan-1,17-diamin (J. M. Warakomski, Chem. Mat. 1992, 4, 1000 - 1004);
- lineare Polyethylenimine, die durch Polymerisation von 4,5-Dihydro-1,3-oxazolen und anschließende Hydrolyse hergestellt werden können (Houben-Weyl, Methoden der Organischen Chemie, Band E20, Seiten 1482 - 1487, Georg Thieme Verlag Stuttgart, 1987);
- verzweigte Polyethylenimine, die durch Polymerisation von Aziridinen erhältlich sind (Houben-Weyl, Methoden der Organischen Chemie, Band E20, Seiten 1482 - 1487, Georg Thieme Verlag Stuttgart, 1987) und die in der Regel folgende Aminogruppenverteilung besitzen:
   25 bis 46 % primäre Aminogruppen,
   30 bis 45 % sekundäre Aminogruppen und
   16 bis 40 % tertiäre Aminogruppen.

Das Polyamin besitzt im bevorzugten Fall ein zahlenmittleres Molekulargewicht Mₙ von maximal 20 000 g/mol, besonders bevorzugt von maximal 10 000 g/mol und insbesondere bevorzugt von maximal 5 000 g/mol.

Lactame bzw. ω-Aminocarbonsäuren, die als polyamidbildende Monomere eingesetzt werden, enthalten 4 bis 19 und insbesondere 6 bis 12 Kohlenstoffatome. Besonders bevorzugt werden ε-Caprolactam, ε-Aminocapronsäure, Capryllactam, ω-Aminocaprylsäure, Laurinlactam, ω-Aminododecansäure und/oder ω-Aminoundecansäure eingesetzt.

Kombinationen von Diamin und Dicarbonsäure sind beispielsweise Hexamethylen-diamin/Adipinsäure, Hexamethylendiamin/Dodecandisäure, Octamethylendiamin/Sebacinsäure, Decamethylendiamin/Sebacinsäure, Decamethylendiamin/Dodecandisäure, Dodecamethylendiamin/Dodecandisäure und Dodecamethylendiamin/2,6-Naphthalindicarbonsäure. Daneben können aber auch alle anderen Kombinationen eingesetzt werden wie Decamethylendiamin/Dodecandisäure/Terephthalsäure, Hexamethylendiamin/Adipinsäure/Terephthalsäure, Hexamethylendiamin/Adipinsäure/Caprolactam, Decamethylendiamin/Dodecandisäure/ω-Aminoundecansäure, Decamethylendiamin/Dodecandisäure/Laurinlactam, Decamethylendiamin/Terephthalsäure/Laurinlactam oder Dodecamethylendiamin/2,6-Naphthalindicarbonsäure/Laurinlactam.

In einer bevorzugten Ausführungsform wird das Pfropfcopolymer zusätzlich unter Verwendung einer Oligocarbonsäure hergestellt, die ausgewählt ist aus 0,015 bis etwa 3 Mol-% Dicarbonsäure und 0,01 bis etwa 1,2 Mol-% Tricarbonsäure, jeweils bezogen auf die Summe der übrigen polyamidbildenden Monomere. Bei dieser Bezugnahme wird bei der äquivalenten Kombination von Diamin und Dicarbonsäure jedes dieser Monomere einzeln betrachtet. Auf diese Weise besitzen die polyamidbildenden Monomere insgesamt einen leichten Überschuß an Carboxylgruppen. Wird eine Dicarbonsäure verwendet, setzt man bevorzugt 0,03 bis 2,2 Mol-%, besonders bevorzugt 0,05 bis 1,5 Mol-%, ganz besonders bevorzugt 0,1 bis 1 Mol-% und insbesondere 0,15 bis 0,65 Mol-% zu; verwendet man eine Tricarbonsäure, so nimmt man vorzugsweise 0,02 bis 0,9 Mol-%, besonders bevorzugt 0,025 bis 0,6 Mol-%, ganz besonders bevorzugt 0,03 bis 0,4 Mol-% und inbesondere 0,04 bis 0,25 Mol-%. Durch die Mitverwendung der Oligocarbonsäure wird die Lösemittel- und Kraftstoffbeständigkeit deutlich verbessert, insbesondere die Hydrolyse- und Alkoholysebeständigkeit und die Spannungsrißbeständigkeit, aber auch das Quellungsverhalten und damit verbunden die Dimensionsbeständigkeit sowie die Sperrwirkung gegen Diffusion.

Als Oligocarbonsäure kann jede beliebige Di- oder Tricarbonsäure mit 6 bis 24 C-Atomen eingesetzt werden, beispielsweise Adipinsäure, Korksäure, Azelainsäure, Sebacinsäure, Dodecandisäure, Isophthalsäure, 2,6-Naphthalindicarbonsäure, Cyclohexan-1.4-dicarbonsäure, Trimesinsäure und/oder Trimellitsäure.

Zusätzlich können, falls gewünscht, aliphatische, alicyclische, aromatische, aralkylische und/oder alkylarylsubstituierte Monocarbonsäuren mit 3 bis 50 Kohlenstoffatomen wie z. B. Laurylsäure, ungesättigte Fettsäuren, Acrylsäure oder Benzoesäure als Regler eingesetzt werden. Mit diesen Reglern kann die Konzentration an Aminogruppen verringert werden, ohne die Molekülgestalt zu verändern. Zusätzlich können auf diese Weise funktionelle Gruppen wie Doppel- bzw. Dreifachbindungen etc. eingeführt werden. Es ist aber erwünscht, dass das Pfropfcopolymer einen substantiellen Anteil an Aminogruppen besitzt. Besonders bevorzugt liegt die Aminogruppenkonzentration des Pfropfcopolymers im Bereich von 150 bis 1 500 mmol/kg, insbesondere bevorzugt im Bereich von 250 bis 1 300 mmol/kg und ganz besonders bevorzugt im Bereich von 300 bis 1 100 mmol/kg. Unter Aminogruppen werden hier und im folgenden nicht nur Aminoendgruppen, sondern auch gegebenenfalls vorhandene sekundäre bzw. tertiäre Aminfunktionen des Polyamins verstanden.

Die Herstellung dieser Pfropfcopolymere ist in der EP-A-1 065 048 näher beschrieben.

Das Polyamid der Komponente II.b. enthält vorzugsweise PA6, PA66, PA6/66, PA68, PA610, PA612, Polyamide aus Hexamethylendiamin sowie Isophthalsäure und/oder Terephthalsäure, auf diesen Typen basierende Copolyamide oder Mischungen hiervon.

PA6/66 ist ein Copolykondensat ausgehend von den Monomeren Caprolactam, Hexamethylendiamin und Adipinsäure.

Als Fluorpolymer sowie als Polyolefin, die optional als Bestandteil der Komponente II.c) enthalten sein können, können die gleichen Verbindungen verwendet werden wie für die Schicht I. Hierbei gilt, dass dann, wenn die Schicht I aus einer Fluorpolymer-Formmasse besteht, die Komponente II.c) ebenfalls ein Fluorpolymer enthalten kann, vorzugsweise vom gleichen Typ, während die Verwendung eines Polyolefins in der Komponente II.c) in diesem Fall die Schichtenhaftung nicht verbessert.

Analog dazu kann die Komponente II.c) dann, wenn die Schicht I aus einer Polyolefin-Formmasse besteht, ebenfalls ein Polyolefin enthalten, vorzugsweise vom gleichen Typ, während die Verwendung eines Fluorpolymers in der Komponente II.c) in diesem Fall die Schichtenhaftung nicht verbessert.

Das Fluorpolymer bzw. das Polyolefin, das optional in der Komponente II.c) enthalten ist, ist vorzugsweise wie oben beschrieben haftungsmodifiziert. In diesem Fall kann auf eine Haftungsmodifizierung der Formmasse der Schicht I verzichtet werden.

Als Hilfs- bzw. Zuschlagstoffe der Komponente II.d) können beispielsweise Weichmacher, Flammschutzmittel, Stabilisatoren, Verarbeitungshilfsmittel, Schichtsilikate, Pigmente, Nucleierungsmittel oder dergleichen verwendet werden.

EVOH ist seit langem bekannt. Es ist ein Copolymer aus Ethylen und Vinylalkohol und wird manchmal auch als EVAL bezeichnet. Der Ethylengehalt im Copolymeren beträgt in der Regel 25 bis 60 Mol-% und insbesondere 28 bis 45 Mol-%. Eine Vielzahl von Typen ist im Handel erhältlich. Beispielsweise sei auf die Firmenschrift "Introduction to Kuraray EVAL™ Resins", Version 1.2/9810 der Firma Kuraray EVAL Europe verwiesen.

Neben den Schichten I bis III können im erfindungsgemäßen Verbund noch weitere Schichten enthalten sein, beispielsweise eine mit der Schicht III über einen geeigneten Haftvermittler (Schicht IV) verbundene Schicht V aus einer Polyamidformmasse oder einer Polyolefinformmasse. Hierfür geeignete Haftvermittler sind Stand der Technik. An diese Polyamid- oder Polyolefinschicht kann sich weiterhin eine Ummantelung aus einem Kautschuk oder einem thermoplastischen Elastomeren anschließen. Genauso kann sich an die Innenschicht I eine weitere, innerste Fluorpolymer- bzw. Polyolefinschicht anschließen.

In einer Ausführungsform enthält der Mehrschichtverbund zusätzlich eine Regeneratschicht. Bei der Herstellung erfindungsgemäßer Verbunde fällt immer wieder Abfall an, zum Beispiel vom Anfahrvorgang der Extrusionsanlage oder in Form von Butzen beim Extrusionsblasformen, oder auch beim Konfektionieren von Rohren. Eine Regeneratschicht aus diesen Abfällen wird so zwischen zwei andere Schichten eingebettet, dass eine eventuelle Sprödigkeit des Regeneratblends möglichst weitgehend kompensiert wird.

Beim erfindungsgemäßen Mehrschichtverbund handelt es sich beispielsweise um ein Rohr, einen Einfüllstutzen oder um einen Behälter, insbesondere zur Leitung oder Bevorratung von Flüssigkeiten oder Gasen. Ein derartiges Rohr kann in gerader oder in gewellter Form ausgeführt sein oder es ist nur in Teilabschnitten gewellt. Wellrohre sind Stand der Technik (z. B. US 5 460 771), weshalb sich weitere Ausführungen hierzu erübrigen. Wichtige Einsatzzwecke solcher Mehrschichtverbunde sind die Verwendung als Kraftstoffleitung, als Tankeinfiillstutzen, als Vapor Line (d. h. Leitung, in der Kraftstoffdämpfe geleitet werden, z. B. Entlüftungsleitungen), als Tankstellenleitung, als Kühlflüssigkeitsleitung, als Klimaanlagenleitung oder als Kraftstoffbehälter wie etwa ein Kanister oder ein Tank.

Bei der Verwendung des erfindungsgemäßen Mehrschichtverbundes zur Leitung oder Bevorratung von brennbaren Flüssigkeiten, Gasen oder Stäuben, wie z. B. Kraftstoff oder Kraftstoffdämpfen, empfiehlt es sich, eine der zum Verbund gehörenden Schichten oder eine zusätzliche Innenschicht elektrisch leitfähig auszurüsten. Dies kann durch Compoundieren mit einem elektrisch leitfähigen Zusatz nach allen Methoden des Standes der Technik geschehen. Als leitfähiger Zusatz können beispielsweise Leitruß, Metallflitter, Metallpulver, metallisierte Glaskugeln, metallisierte Glasfasern, Metallfasern (beispielsweise aus rostfreiem Stahl), metallisierte Whiskers, Kohlefasern (auch metallisiert), intrinsisch leitfähige Polymere oder Graphitfibrillen verwendet werden. Es können auch Mischungen verschiedener leitfähiger Zusätze eingesetzt werden.

Im bevorzugten Fall befindet sich die elektrisch leitfähige Schicht in direktem Kontakt mit dem zu führenden oder zu bevorratenden Medium und besitzt einen Oberflächenwiderstand von maximal 10⁹ Ω/square und bevorzugt maximal 10⁶ Ω/square. Die Meßmethode zur Bestimmung des Widerstands von mehrschichtigen Rohren ist in der SAE J 2260 (November 1996, Paragraph 7.9) erläutert.

Die Fertigung des Mehrschichtverbundes kann ein- oder mehrstufig erfolgen, beispielsweise mittels einstufiger Verfahren auf dem Wege des Mehrkomponentenspritzgusses, der Coextrusion, des Coextrusionsblasformens (beispielsweise auch 3D-Blasformen, Schlauchextrusion in eine geöffnete Formhälfte, 3D-Schlauchmanipulation, Saugblasformen, 3D-Saugblasformen, sequentielles Blasformen) oder mittels mehrstufiger Verfahren, wie z. B. Beschichtung.

Die Erfindung wird im Folgenden beispielhaft erläutert.

In den Beispielen wurden folgende Formmassen verwendet:

### Innenschicht (Schicht I):

| | |
|---|---|
| Fluorpolymer 1: | Mischung gemäß EP-A-0 673 762 aus 95 Gew.-% eines handelsüblichen PVDF und 5 Gew.-% eines Polyglutarimids, das aus folgenden Grundbausteinen aufgebaut ist: |
| | 57 Gew.-% hergeleitet von Methylmethacrylat, |
| | 30 Gew.-% vom N-Methylglutarimid-Typ, |
| | 3 Gew.-% hergeleitet von Methacrylsäure und |
| | 10 Gew.-% vom Glutaranhydrid-Typ |
| | (hergestellt durch Umsetzung von Methylmethacrylat mit einer wässrigen Lösung von Methylamin in der Schmelze). |
| Fluorpolymer 2: | NEOFLON^{®} RP 5000 der Fa. Daikin Industries Ltd., Japan, ein modifiziertes EFEP |
| Fluorpolymer 3: | NEOFLON^{®} RP 5000 AS der Fa. Daikin Industries Ltd., Japan, ein elektrisch leitfähig eingestelltes modifiziertes EFEP |
| Polyolefin 1: | STAMYLAN^{®} P 83 MF 10, ein PP-Copolymer der DSM Deutschland GmbH |
| Polyolefin 2: | VESTOLEN^{®} A 6013, ein PE-HD der DSM Deutschland GmbH |

### Haftvermittler (Schicht II sowie IV):

Herstellung des Pfropfcopolymers:
9,5 kg Laurinlactam wurden in einem Aufheizkessel bei 180 °C bis 210 °C aufgeschmolzen und in einen druckfesten Polykondensationskessel überführt; anschließend wurden 475 g Wasser und 0,54 g Hypophosphorige Säure zugegeben. Die Lactamspaltung wurde bei 280 °C unter dem sich einstellenden Eigendruck durchgeführt; danach wurde innerhalb von 3 Stunden auf einen Restwasserdampfdruck von 5 bar entspannt und 500 g Polyethylenimin (LUPASOL G 100 der BASF AG, Ludwigshafen) sowie 15 g Dodecandisäure zudosiert. Beide Komponenten wurden unter dem sich einstellenden Eigendruck eingearbeitet; anschließend wurde auf Atmosphärendruck entspannt und dann 2 Stunden bei 280 °C Stickstoff über die Schmelze geleitet. Die klare Schmelze wurde über eine Schmelzepumpe als Strang ausgetragen, im Wasserbad abgekühlt und anschließend granuliert.

| | |
|---|---|
| HV 1: | 12,6 kg eines PA6 (ULTRAMID^{®} B4 der BASF AG), 22,82 kg Fluorpolymer 2 und 5,0 kg des Pfropfcopolymers wurden auf einem Doppelschneckenkneter ZE 25 33D der Fa. Berstorff bei 270 °C und 150 U/min sowie einem Durchsatz von 10 kg/h schmelzegemischt, stranggepresst und granuliert. |
| HV 2: | ein PA6 (ULTRAMID^{®} B4 der BASF AG) |
| HV 3: | wie HV 1, mit dem Unterschied, dass das Fluorpolymer 2 ersetzt wurde durch maleinsäureanhydridgepfropftes Polypropylen (ADMER^{®} QB 520 E der Mitsui Chemicals Inc., Japan) |
| HV 4: | wie HV 1, mit dem Unterschied, dass das Fluorpolymer 2 ersetzt wurde durch maleinsäureanhydridgepfropftes Polyethylen (ADMER^{®} NF 408 E der Mitsui Chemicals Inc., Japan) |
| HV 5: | Mit Hilfe eines Doppelschneckenextruders Berstorff ZE 25 wurde bei 280 °C eine innige Mischung aus 35,3 Gew.-% VESTAMID^{®} D22 (PA612 der Degussa AG), 48,1 Gew.-% ULTRAMID^{®} B5W (ein PA6 der BASF AG), 10,7 Gew.-% des Pfropfcopolymers sowie 5,4 Gew.-% EXXELOR^{®} VA1803 (mit Maleinsäureanhydrid funktionalisierter Ethylen-Propylen-Kautschuk der Fa. EXXON) hergestellt, als Strang extrudiert, granuliert und getrocknet. |

### EVOH-Schicht (Schicht III): EVAL^{®} F101, ein EVOH der Fa. KURARAY mit 32 Mol-% Ethylen

### Außenschicht (Schicht V):

| | |
|---|---|
| PA12: | ein schlagzähmodifiziertes, weichgemachtes Polyamid der Degussa AG (VESTAMID^{®} X 7293) |
| Polyolefin 2: | wie vorstehend |

### Beispiele 1 bis 5:

Auf einer 5-Schichtanlage, die mit zwei 45-er Extrudern und drei 30-er Extrudern ausgerüstet war, wurden Rohre mit den Maßen 8 x 1 mm bei einer Extrusionsgeschwindigkeit von ca. 12 m/min hergestellt.

| Beispiel | Innenschicht = Schicht I | Schicht II | Schicht III | Schicht IV | Schicht V |
|---|---|---|---|---|---|
| 1 | 0,1 mm Fluorpolymer 1 | 0,2 mm HV 2 | 0,1 mm EVOH | 0,2 mm HV 5 | 0,4 mm PA12 |
| 2 | 0,1 mm Fluorpolymer 2 | 0,2 mm HV 1 | 0,1 mm EVOH | 0,2 mm HV 5 | 0,4 mm PA12 |
| 3 | 0,1 mm Fluorpolymer 3 | 0,2 mm HV 1 | 0,1 mm EVOH | 0,2 mm HV 5 | 0,4 mm PA12 |
| 4 | 0,1 mm Polyolefin 1 | 0,2 mm HV 3 | 0,1 mm EVOH | 0,2 mm HV 5 | 0,4 mm PA12 |
| 5 | 0,1 mm Polyolefin 2 | 0,2 mm HV 4 | 0,1 mm EVOH | 0,2 mm HV 4 | 0,4 mm Polyolefin 2 |

### Charakterisierung der Rohre:

Bei den Rohren der Beispiele 1 bis 5 war die Haftung zwischen der Fluorpolymer- bzw. Polyolefin-Innenschicht und der EVOH-Schicht sowohl extrusionsfrisch als auch nach Kraftstofflagerung (Innenkontaktlagerung mit CM 15, einem Testkraftstoff aus 42,5 Vol.-% Isooctan, 42,5 Vol.-% Toluol und 15 Vol.-% Methanol, bei 80 °C mit wöchentlichem Kraftstoffwechsel, 1000 h) so hoch, dass der Verbund an dieser Stelle nicht getrennt werden konnte.

Die Bruchquote nach der Kälteschlagzähigkeitsprüfung bei -40 °C nach SAE J 2260 betrug bei allen Rohren, sowohl extrusionsfrisch als auch nach Kraftstofflagerung (Innenkontaktlagerung mit CM 15 bei 80 °C mit wöchentlichem Kraftstoffwechsel, 1000 h) jeweils 0/10.

## Patentansprüche

1. Mehrschichtverbund, der folgende Schichten enthält:
I. Eine innere Schicht I, ausgewählt aus einer Fluorpolymer-Formmasse und einer Polyolefin-Formmasse;
II. eine Haftvermittlerschicht II, die folgende Zusammensetzung aufweist:
a) 0 bis 80 Gew.-Teile eines Pfropfcopolymers, das unter Verwendung folgender Monomere hergestellt wird:
- 0,5 bis 25 Gew.%, bezogen auf das Pfropfcopolymer, eines Polyamins mit mindestens 4 Stickstoffatomen
sowie
- polyamidbildende Monomere, ausgewählt aus Lactamen, ω-Aminocarbonsäuren und/oder äquimolaren Kombinationen von Diamin und Dicarbonsäure;
b) 0 bis 100 Gew.-Teile Polyamid,
c) 0 bis 85 Gew.-Teile eines Polymeren, ausgewählt aus Fluorpolymeren und Polyolefmen,
wobei die Summe der Gew.-Teile von a), b) und c) 100 ergibt
und wobei zusätzlich
- in der Summe der Komponenten a) und b) mindestens 20 Gew.-Teile aus Monomereinheiten bestehen, die sich von Caprolactam und/oder der Kombination Hexamethylendiamin/Adipinsäure, Hexamethylendiamin/Korksäure, Hexamethylendiamin/Sebacinsäure, Hexamethylendiamin/Dodecandisäure, Hexamethylendiamin/Isophthalsäure oder Hexamethylendiamin/Terephthalsäure herleiten;
d) maximal 50 Gew.-Teile Zusatzstoffe, ausgewählt aus schlagzähmachendem Kautschuk und/oder üblichen Hilfs- bzw. Zuschlagstoffen;
III. eine Schicht III aus einer EVOH-Formmasse.

2. Mehrschichtverbund gemäß Anspruch 1,
**dadurch gekennzeichnet, dass**
- die Komponente II.a) zu 1 bis 60 Gew.-Teilen und/oder
- die Komponente II.b) zu 10 bis 75 Gew.-Teilen enthalten ist.

3. Mehrschichtverbund gemäß Anspruch 1,
**dadurch gekennzeichnet, dass**
- die Komponente II.a) zu 3 bis 40 Gew.-Teilen und/oder
- die Komponente II.b) zu 25 bis 65 Gew.-Teilen enthalten ist.

4. Mehrschichtverbund gemäß einem der vorhergehenden Ansprüche,
**dadurch gekennzeichnet,**
**dass** von der Komponente II.c) 5 bis 75 Gew.-Teile enthalten sind.

5. Mehrschichtverbund gemäß Anspruch 4,
**dadurch gekennzeichnet,**
**dass** von der Komponente II.c) 10 bis 65 Gew.-Teile enthalten sind.

6. Mehrschichtverbund gemäß Anspruch 4,
**dadurch gekennzeichnet,**
**dass** von der Komponente II.c) 20 bis 55 Gew.-Teile enthalten sind.

7. Mehrschichtverbund gemäß einem der vorhergehenden Ansprüche,
**dadurch gekennzeichnet,**
**dass** als Fluorpolymer ausgewählt ist aus der Gruppe PVDF, ETFE, mit Hilfe einer Terkomponente modifiziertes ETFE, E-CTFE, PCTFE, THV, FEP und PFA.

8. Mehrschichtverbund gemäß einem der Ansprüche 1 bis 6,
**dadurch gekennzeichnet,**
**dass** als Polyolefin Polyethylen oder isotaktisches Polypropylen eingesetzt wird.

9. Mehrschichtverbund gemäß einem der vorhergehenden Ansprüche,
**dadurch gekennzeichnet,**
**dass** das Fluorpolymer bzw. das Polyolefin haftungsmodifiziert ist.

10. Mehrschichtverbund gemäß einem der vorhergehenden Ansprüche,
**dadurch gekennzeichnet,**
**dass** das Polyamid der Komponente II.b. PA6, PA66, PA6/66, PA68, PA610, PA612, ein Polyamid aus Hexamethylendiamin sowie Isophthalsäure und/oder Terephthalsäure oder Mischungen daraus enthält.

11. Mehrschichtverbund gemäß einem der vorhergehenden Ansprüche,
**dadurch gekennzeichnet,**
**dass** er zusätzlich eine mit der Schicht III über einen geeigneten Haftvermittler verbundene Schicht aus einer Polyamidformmasse oder einer Polyolefinformmasse besitzt.

12. Mehrschichtverbund gemäß einem der vorhergehenden Ansprüche,
**dadurch gekennzeichnet,**
**dass** er ein Rohr oder ein Hohlkörper ist.

13. Mehrschichtverbund gemäß einem der vorhergehenden Ansprüche,
**dadurch gekennzeichnet,**
**dass** er ein Rohr ist, das vollständig oder in Teilbereichen gewellt ist.

14. Mehrschichtverbund gemäß einem der vorhergehenden Ansprüche,
**dadurch gekennzeichnet,**
**dass** er eine Kraftstoffleitung, eine Bremsflüssigkeitsleitung, eine Kühlflüssigkeitsleitung, eine Hydraulikflüssigkeitsleitung, eine Tankstellenleitung, eine Klimaanlagenleitung, eine Vapor Line, ein Behälter oder ein Einfüllstutzen ist.

15. Mehrschichtverbund gemäß einem der vorhergehenden Ansprüche,
**dadurch gekennzeichnet,**
**dass** eine der zum Verbund gehörenden Schichten oder eine zusätzliche Innenschicht elektrisch leitfähig ausgerüstet ist.

16. Mehrschichtverbund gemäß einem der vorhergehenden Ansprüche,
**dadurch gekennzeichnet,**
**dass** er durch Coextrusion, Beschichtung, Mehrkomponentenspritzgießen oder Coextrusionsblasformen hergestellt wird.

## Claims

1. Multilayer composite which comprises the following layers:
I. an interior layer I selected from among a fluoropolymer molding composition and a polyolefin molding composition;
II. a bonding agent layer II which has the following composition:
a) from 0 to 80 parts by weight of a graft copolymer prepared using the following monomers:
- from 0.5 to 25% by weight, based on the graft copolymer, of a polyamine having at least 4 nitrogen atoms and
- polyamide-forming monomers selected from among lactams, ω-aminocarboxylic acids and equimolar combinations of diamine and dicarboxylic acid;
b) from 0 to 100 parts by weight of polyamide,
c) from 0 to 85 parts by weight of a polymer selected from among fluoropolymers and polyolefins,
with the sum of the parts by weight of a), b) and c) being 100,
and, in addition,
- the sum of the components a) and b) comprising at least 20 parts by weight of monomer units derived from caprolactam and/or the combination hexamethylenediamine/adipic acid, hexamethylenediamine/ suberic acid, hexamethylenediamine/sebacic acid, hexamethylenediamine/dodecanedioic acid, hexamethylenediamine/isophthalic acid or hexamethylenediamine/terephthalic acid and
d) not more than 50 parts by weight of additives selected from among impact-modifying rubber and customary auxiliaries and additives;
III. a layer III comprising an EVOH molding composition.

2. Multilayer composite according to Claim 1, **characterized in that**
- the component II.a) is present in an amount of from 1 to 60 parts by weight and/or
- the component II.b) is present in an amount of from 10 to 75 parts by weight.

3. Multilayer composite according to Claim 1, **characterized in that**
- the component II.a) is present in an amount of from 3 to 40 parts by weight and/or
- the component II.b) is present in an amount of from 25 to 65 parts by weight.

4. Multilayer composite according to any of the preceding claims, **characterized in that** from 5 to 75 parts by weight of the component II.c) are present.

5. Multilayer composite according to Claim 4, **characterized in that** from 10 to 65 parts by weight of the component II.c) are present.

6. Multilayer composite according to Claim 4, **characterized in that** from 20 to 55 parts by weight of the component II.c) are present.

7. Multilayer composite according to any of the preceding claims, **characterized in that** the fluoropolymer is selected from the group consisting of PVDF, ETFE, ETFE modified by means of a third component, E-CTFE, PCTFE, THV, FEP and PFA.

8. Multilayer composite according to any of Claims 1 to 6, **characterized in that** polyethylene or isotactic polypropylene is used as polyolefin.

9. Multilayer composite according to any of the preceding claims, **characterized in that** the fluoropolymer or the polyolefin is adhesion-modified.

10. Multilayer composite according to any of the preceding claims, **characterized in that** the polyamide of the component II.b. comprises PA6, PA66, PA6/66, PA68, PA610, PA612, a polyamide derived from hexamethylenediamine together with isophthalic acid and/or terephthalic acid or mixtures thereof.

11. Multilayer composite according to any of the preceding claims, **characterized in that** it additionally has a layer which comprises a polyamide molding composition or a polyolefin molding composition and is joined to the layer III by means of a suitable bonding agent.

12. Multilayer composite according to any of the preceding claims, **characterized in that** it is a pipe or a hollow body.

13. Multilayer composite according to any of the preceding claims, **characterized in that** it is a pipe which is corrugated in its entirety or in subregions.

14. Multilayer composite according to any of the preceding claims, **characterized in that** it is a fuel line, a brake fluid line, a coolant line, a hydraulic fluid line, a filling station line, an air conditioner line, a vapor line, a container or a filling port.

15. Multilayer composite according to any of the preceding claims, **characterized in that** one of the layers of which the composite is composed or an additional interior layer has been made electrically conductive.

16. Multilayer composite according to any of the preceding claims, **characterized in that** it is produced by coextrusion, coating, multicomponent injection molding or coextrusion blow molding.

## Revendications

1. Composite multicouche, contenant les couches suivantes :
I. une couche intérieure I, choisie parmi un matériau de moulage fluoropolymère et un matériau de moulage polyoléfine ;
II. une couche de promoteur d'adhésion II, qui présente la composition suivante :
a) 0 à 80 parties en poids d'un copolymère greffé, qui est fabriqué en utilisant les monomères suivants :
- 0,5 à 25 % en poids, par rapport au copolymère greffé, d'une polyamine contenant au moins 4 atomes d'azote,
et
- des monomères formant un polyamide, choisis parmi les lactames, les acides ω-aminocarboxyliques et/ou les combinaisons équimolaires de diamine et d'acide dicarboxylique ;
b) 0 à 100 parties en poids de polyamide,
c) 0 à 85 parties en poids d'un polymère choisi parmi les fluoropolymères et les polyoléfines,
la somme des parties en poids de a), b) et c) étant de 100
et également
- dans la somme des composants a) et b), au moins 20 parties en poids étant constituées d'unités monomères dérivées de caprolactame et/ou de la combinaison hexaméthylènediamine/acide adipique, hexaméthylènediamine/acide subérique, hexaméthylènediamine/acide sébacique, hexaméthylènediamine/acide dodécanoïque, hexaméthylènediamine/acide isophtalique ou hexaméthylènediamine/acide téréphtalique ;
d) au plus 50 parties en poids d'additifs choisis parmi le caoutchouc renforçant et/ou les adjuvants ou additifs usuels ;
III. une couche III en un matériau de moulage EVOH.

2. Composite multicouche selon la revendication 1, **caractérisé en ce que**
- le composant II.a) est contenu à hauteur de 1 à 60 parties en poids et/ou
- le composant II.b) est contenu à hauteur de 10 à 75 parties en poids.

3. Composite multicouche selon la revendication 1, **caractérisé en ce que**
- le composant II.a) est contenu à hauteur de 3 à 40 parties en poids et/ou
- le composant II.b) est contenu à hauteur de 25 à 65 parties en poids.

4. Composite multicouche selon l'une quelconque des revendications précédentes, **caractérisé en ce que** 5 à 75 parties en poids du composant II.c) sont contenues.

5. Composite multicouche selon la revendication 4, **caractérisé en ce que** 10 à 65 parties en poids du composant II.c) sont contenues.

6. Composite multicouche selon la revendication 4, **caractérisé en ce que** 20 à 55 parties en poids du composant II.c) sont contenues.

7. Composite multicouche selon l'une quelconque des revendications précédentes, **caractérisé en ce que** le fluoropolymère est choisi dans le groupe constitué par le PVDF, l'ETFE, l'ETFE modifié à l'aide d'un composant tertiaire, l'E-CTFE, le PCTFE, le THV, le FEP et le PFA.

8. Composite multicouche selon l'une quelconque des revendications 1 à 6, **caractérisé en ce que** du polyéthylène ou du polypropylène isotactique est utilisé en tant que polyoléfine.

9. Composite multicouche selon l'une quelconque des revendications précédentes, **caractérisé en ce que** le fluoropolymère ou la polyoléfine est modifié par adhésion.

10. Composite multicouche selon l'une quelconque des revendications précédentes, **caractérisé en ce que** le polyamide du composant II.b contient du PA6, du PA66, du PA6/66, du PA68, du PA610, du PA612, un polyamide d'hexaméthylènediamine et d'acide isophtalique et/ou d'acide téréphtalique ou leurs mélanges.

11. Composite multicouche selon l'une quelconque des revendications précédentes, **caractérisé en ce qu'**il comprend également une couche en un matériau de moulage polyamide ou un matériau de moulage polyoléfine reliée avec la couche III par un promoteur d'adhésion approprié.

12. Composite multicouche selon l'une quelconque des revendications précédentes, **caractérisé en ce qu'**il s'agit d'un tube ou d'un corps creux.

13. Composite multicouche selon l'une quelconque des revendications précédentes, **caractérisé en ce qu'**il s'agit d'un tube qui est ondulé en totalité ou en partie.

14. Composite multicouche selon l'une quelconque des revendications précédentes, **caractérisé en ce qu'**il s'agit d'une conduite de carburant, d'une conduite de liquide de frein, d'une conduite de liquide de refroidissement, d'une conduite de liquide hydraulique, d'une conduite de station service, d'une conduite de climatiseur, d'une conduite de vapeur, d'un contenant ou d'une tubulure de remplissage.

15. Composite multicouche selon l'une quelconque des revendications précédentes, **caractérisé en ce qu'**une des couches du composite ou une couche intérieure supplémentaire est électriquement conductrice.

16. Composite multicouche selon l'une quelconque des revendications précédentes, **caractérisé en ce qu'**il est fabriqué par coextrusion, revêtement, moulage par injection multicomposant ou moulage par coextrusionsoufflage.
